# EUROPEAN PATENT APPLICATION

(11) **EP 2 824 578 A1**
(43) Date of publication of application: **14.01.2015**
(21) Application number: 12870626.4
(22) Date of filing: 09.03.2012
(51) Int. Cl.: G06F 13/00

(54) **INFORMATION PROCESSING DEVICE, METHOD, AND PROGRAM**

(71) Applicant: Murakumo Corporation, Tokyo 153-0061 (JP)
(72) Inventor: WATANABE, Takahiro, Tokyo 153-0061 (JP)
(74) Representative: Chettle, Adrian John
(86) International application number: PCT/JP2012/056077
(87) International publication number: WO 2013/132643

(57) **Abstract**

An application server includes: an obtaining unit that obtains first content from a content management server; a retrieval unit that retrieves an "command for application server" that is embedded in the first content and not executed by a client terminal; a command generation unit that generates a "command for client terminal" in accordance with the "command for application server" ; a content generation unit that generates second content in which the "command for application server" is replaced by the generated "command for client terminal" ; and a transmission unit that transmits the second content in response to a request from the client terminal.

## Description

### [Technical Field]

The present invention relates to a technique for controlling content.

### [Background Art]

In a conventional technique employed in a system for distributing web content from a server to a client terminal, an outer appearance of the web content distributed from the server is modified using a proxy server that acts as an intermediary between the client terminal and the server (see Japanese Patent Application Publication No. H11-242644, Japanese Patent Application Publication No. 2001-109743, and Japanese Patent Application Publication No. 2003-114843).

### [Summary of the Invention]

### [Problems to be solved by the Invention]

A content management system is used conventionally to manage content distributed to a client terminal. However, when dynamic content that may vary upon each communication with the client terminal is distributed, the dynamic content is generated every time communication with the client terminal is performed, and therefore content management performed by a conventional content management system is lacking in convenience.

For example, in the case of a system where dynamic content is generated by inputting a template into a server that creates the dynamic content, a designer who creates the template must understand the behavior of the server that creates the dynamic content. Further, when the server that creates the dynamic content itself manages a file serving as the template, the template must be created offline first, and then the server that creates the dynamic content must be updated using the created template. It is therefore difficult to perform updates in real time.

In consideration of the problems described above, an object of the present invention is to improve the convenience of content management.

### [Means for solving the Problems]

The present invention employs following means to solve the problems described above. Specifically, the present invention is an information processing apparatus including: obtaining means for obtaining first content from a content management server; retrieving means for retrieving a predetermined command that is embedded in the first content and not executed by a client terminal; command generating means for generating a command that can be executed by the client terminal in accordance with the predetermined command; content generating means for generating second content in which the predetermined command of the first content is replaced by the command generated by the command generating means; and transmitting means for transmitting the second content in response to a request from the client terminal.

In the present invention, the second content is generated by replacing the predetermined command, which is embedded in the first content and not executed by the client terminal, with a command that can be executed by the client terminal, whereupon the second content is transmitted to the client terminal. Here, the command that can be executed by the client terminal is a command described in hypertext markup language (HTML) or JavaScript, for example, and is generated in accordance with the predetermined command not executed by the client terminal. According to the present invention, by employing this configuration, content (the second content) including a command that can be executed by the client terminal can be distributed to the client terminal simply by embedding the predetermined command in the first content, and therefore content management can be improved in convenience in comparison with a conventional content management system.

Further, the command generating means may generate a command not to modify a display layout of the first content even after the content generating means has performed the replacement.

According to the present invention, in contrast to conventional content control, content (the second content) including a command that can be executed by the client terminal can be generated without modifying the display layout. In other words, according to the present invention, a content designer can design content without worrying about destroying the display layout of the content during content control.

Further, the command generating means may generate the command in accordance with communication identification information for identifying communication with the client terminal in addition to the predetermined command.

Here, the communication identification information is session information used during hypertext transfer protocol (HTTP) communication or the like, for example. Note, however, that the communication identification information is not limited to session information, and may be any information for identifying communication between the information processing apparatus and the client terminal.

The information processing apparatus may further include caching means for holding the first content obtained by the obtaining means, and when the first content has been cached by the caching means upon reception of a request for content from the client terminal, the content generating means may generate the second content on the basis of the first content cached by the caching means.

By caching the first content and generating the second content on the basis of the cache, the command that can be executed by the client terminal can easily be set in a latest condition while increasing the speed of processing by the caching.

Further, the command generating means may interpret a parameter included in the predetermined command, and generate the command that can be executed by the client terminal in accordance with an interpretation result.

Furthermore, the parameter may include a parameter specifying a property of a display corresponding to the command generated by the command generating means, and the command generating means may generate the command that can be executed by the client terminal in accordance with the display property specified by the parameter.

Properties that can be specified by the parameter include, for example, a size of a display area, a terminal type, a number of display columns, and so on.

Further, the content management server may have a function for transmitting HTML content in response to a content acquisition request in HTTP, and the obtaining means may obtain HTML content as the first content by issuing a content acquisition request in HTTP to the content management server.

By providing the content management server with a function for transmitting HTML content in response to a content acquisition request in HTTP, a typical content management server can be used to implement the present invention. Moreover, a function for replacing the predetermined command not executed by the client terminal with the command that can be executed by the client terminal is easy to add to an already built content management server.

The information processing apparatus may further include: determining means for determining whether or not a request for content received from the client terminal is a predetermined request requesting content in which the command generated by the command generating means is to be included; and instructing means for instructing the client terminal to obtain the requested content directly from the content management server when the determining means determines that the request is not the predetermined request, wherein, when the determining means determines that the request is the predetermined request, the content generating means may generate the second content.

In this case, the information processing apparatus performs the replacement processing described above only in relation to content requiring processing to replace the command included in the content, from among the requests from the client terminal, and redirects content not requiring the replacement processing to the content management server. With this configuration, a processing load on the information processing apparatus can be dispersed.

The present invention can also be understood as a method executed by a computer or a program executed on a computer. The present invention can also be understood as a recording medium which can be read by a computer or another apparatus, machine, or the like and on which the program is recorded. Here, a recording medium that can be read by a computer or the like is a recording medium on which information such as data and programs is stored electrically, magnetically, optically, mechanically, or by a chemical action, and which can be read from a computer or the like.

### [Effects of the Invention]

According to the present invention, the convenience of content management can be improved.

### [Brief Description of the Drawings]

FIG. 1 is a schematic view showing a configuration of a system according to an embodiment;
FIG. 2 is a schematic view showing a hardware configuration of a server according to the embodiment;
FIG. 3 is a schematic view showing a functional configuration of the server according to the embodiment;
FIG. 4 is a flowchart showing a flow of content control processing according to the embodiment; and
FIG. 5 is a flowchart showing a flow of content control processing according to the embodiment.

### [Embodiments of the Invention]

An embodiment of the present invention will be described below on the basis of the drawings. Note that the following embodiment is merely an example, and the present invention is not limited to the specific configurations described below. Upon implementation of the present invention, specific configurations corresponding to the embodiment may be employed as appropriate.

### (System configuration)

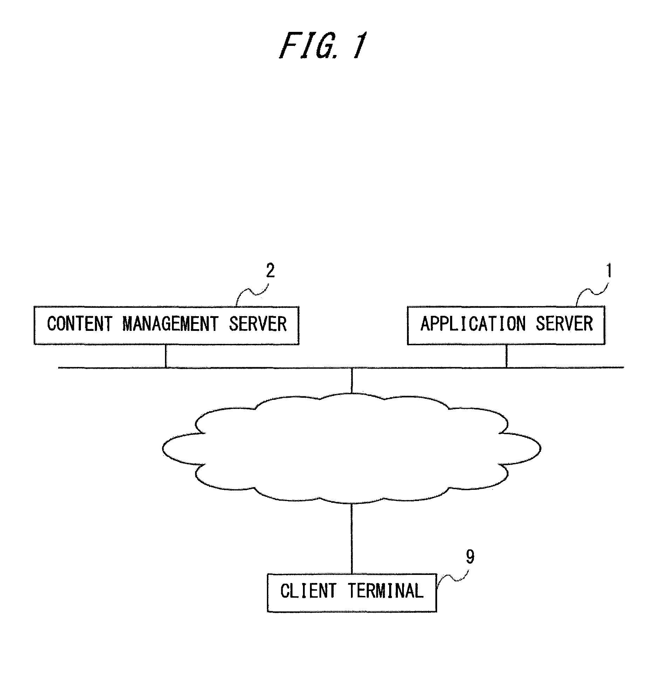

FIG. 1 is a schematic view showing a configuration of a system according to this embodiment. The system according to this embodiment includes an application server 1 and a content management server 2, which are connected to be capable of communicating with each other via a network such as the Internet. Further, a client terminal 9 is connected to the system according to this embodiment via the network. Note that the application server 1 and the content management server 2 may be constituted respectively either by individual components or by a plurality of components connected via a network or the like.

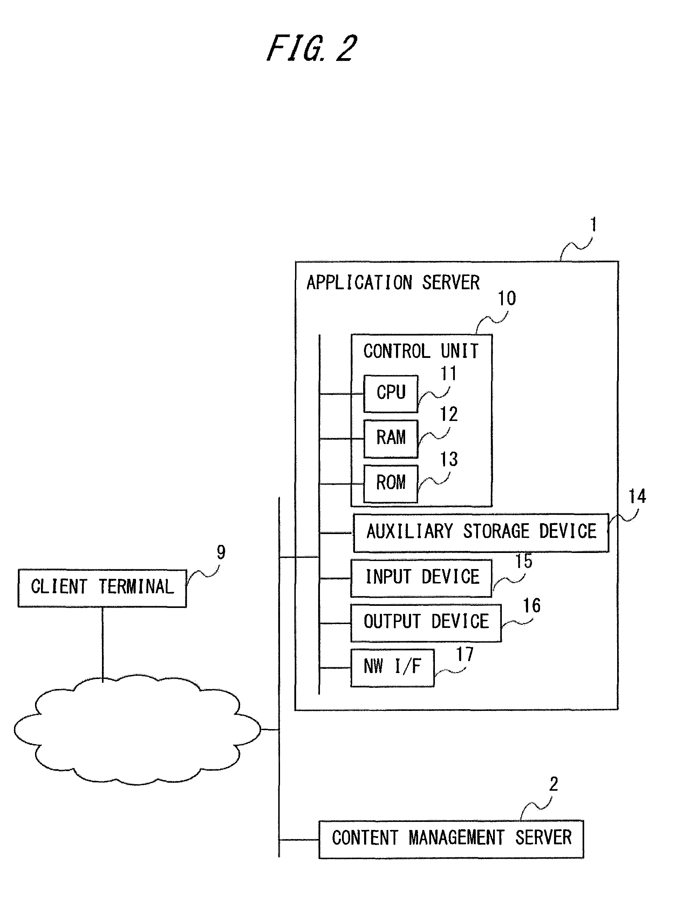

FIG. 2 is a schematic view showing a hardware configuration of the servers according to this embodiment. The application server 1 is an information processing apparatus including a control unit 10 constituted by a central processing unit (CPU) 11, a random access memory (RAM) 12, a read only memory (ROM) 13, and so on, an auxiliary storage device 14, an input device 15, an output device 16, and a network interface 17. Note that when the present invention is implemented, the information processing apparatus according to the present invention need not have an identical configuration to the configuration described above, and as regards the specific hardware configuration of the information processing apparatus, constituent elements may be omitted, replaced, and added as appropriate in accordance with the embodiment.

Similarly to the application server 1, the content management server 2 is an information processing apparatus (not shown in the drawings) including a control unit constituted by a CPU, a RAM, a ROM, and so on, an auxiliary storage device, an input device, an output device, and a network interface. Also similarly to the application server 1, the client terminal 9 is an information processing apparatus (not shown in the drawings) including a control unit constituted by a CPU, a RAM, a ROM, and so on, an auxiliary storage device, an input device, an output device, and a network interface.

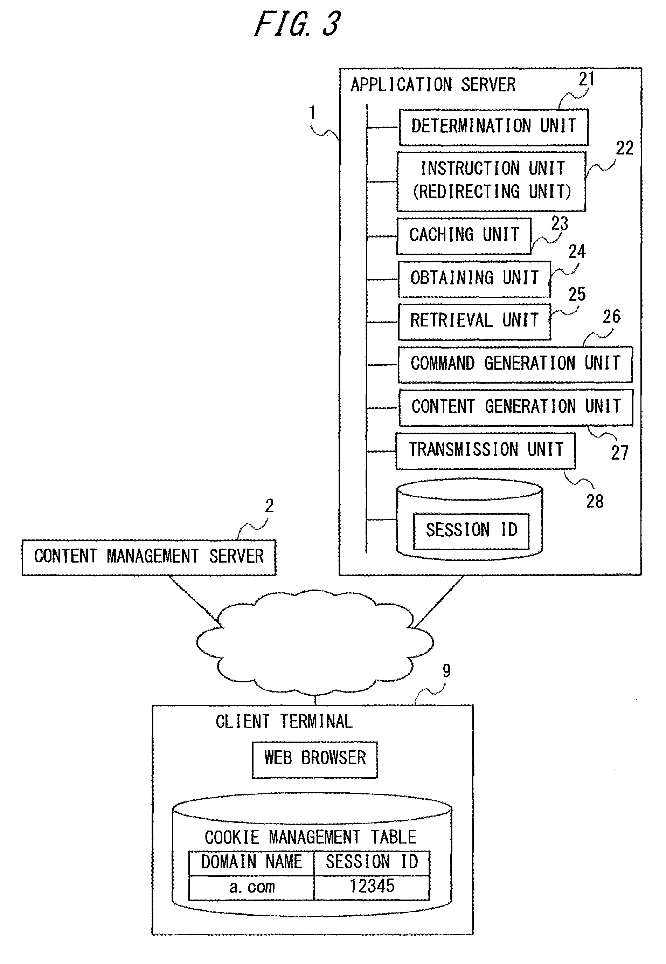

FIG. 3 is a schematic view showing a functional configuration of the respective apparatuses constituting the system according to this embodiment. The application server 1 according to this embodiment functions as an information processing apparatus having a determination unit 21, an instruction unit (a redirecting unit) 22, a caching unit 23, an obtaining unit 24, a retrieval unit 25, a command generation unit 26, a content generation unit 27, and a transmission unit 28 by having the CPU 11 interpret and execute various programs decompressed in the RAM 12 in order to control the various pieces of hardware provided in the application server 1. Further, in this embodiment, an example in which all of these functions are executed by the general purpose CPU 11 is described, but all or a part of the functions may be realized by one or a plurality of dedicated processors.

Here, the application server 1 and the content management server 2 are servers having functions for managing a website (a website that can be accessed by a domain name "a.com", for example) and transmitting HTML content in response to a content acquisition request in HTTP. The application server 1 and the content management server 2 distribute content of the website in response to a request from the client terminal 9. In other words, in this embodiment, the content is a website described in HTML or the like. Note, however, that when the present invention is implemented, the content is not limited to a website described in HTML or the like, and the present invention may be applied to content described in another language or using a different data format.

In this embodiment, a connection request from the client terminal 9 to the website is set to be received first by the application server 1. The application server 1 manages communication between the client terminal 9 and the application server 1 and identifies the client terminal 9 or a user by issuing a session ID using a cookie and including the session ID in the communication with the client terminal 9.

The client terminal 9 includes a web browser, and has functions for transmitting a request to a web server specified by a uniform resource locator (URL), receiving content (a website, script, or the like, for example) transmitted by the server in response to the request, and interpreting, executing, and displaying the received content. Further, the client terminal 9 holds session information, which is included in the cookie received from the web server and used to manage the communication with the connection destination server, in a cookie management table in association with the domain name.

In the example shown in FIG. 2, a session ID "12345" issued by the application server 1 using a cookie is held in the cookie management table in association with the domain name "a. com" of the website managed by the application server 1 and the content management server 2. When the client terminal 9 connects to the web server, the client terminal 9 reads the session ID corresponding to the domain name of the web server from the cookie management table, and notifies the server thereof.

The content management server 2 holds content created by a designer, and in response to a content acquisition request in HTTP from the application server 1 or the client terminal 9, distributes the content to the application server 1 or the client terminal 9 serving as the request source. Note that in this embodiment, a command for realizing a function included in dynamic content such as a shopping cart, which may vary upon each communication with the client terminal, is generated by the application server 1. In this embodiment, therefore, a command for realizing a dynamic function need not be attached to the content held by the content management server 2. Hence, the content management server 2 need hold only a non-dynamic part of static content and dynamic content.

### (Processing flow)

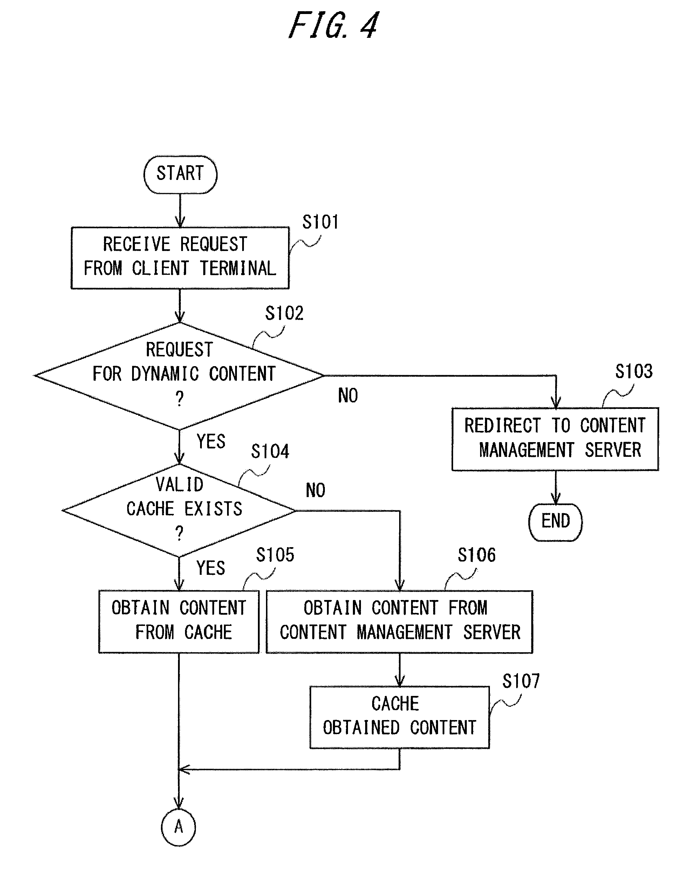

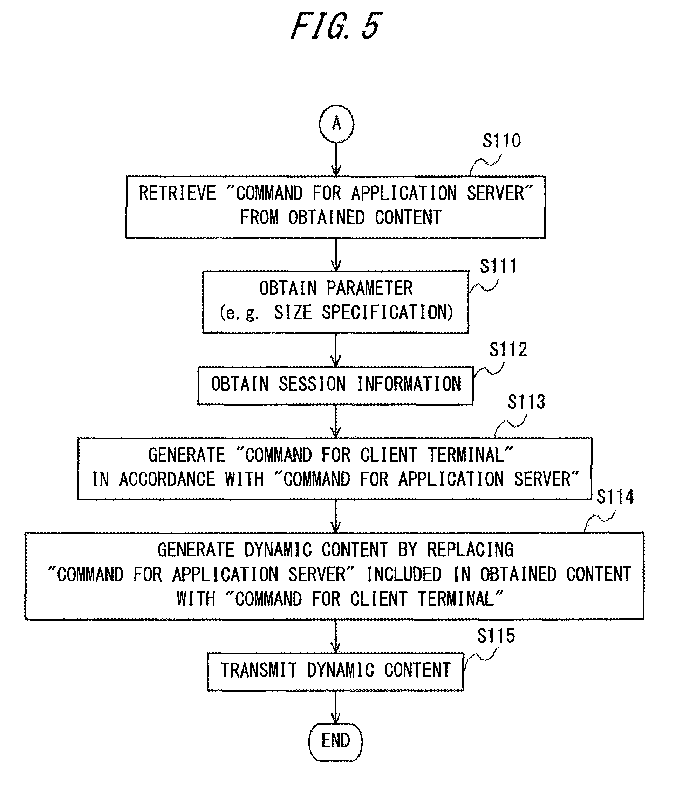

Next, using FIGS. 4 and 5, processing according to this embodiment will be described in detail. Note that specific content, a sequence, and so on of the processing described in this embodiment are examples for implementing the present invention, and the specific content, the sequence, and so on of the processing may be selected as appropriate in accordance with the embodiment.

FIGS. 4 and 5 are flowcharts showing a flow of content control processing according to this embodiment. The processing shown in the flowcharts is started when a request transmitted by the client terminal 9 is received by the application server 1.

In step S101, the request is received. The application server 1 receives the request transmitted by the client terminal 9. Here, the request may be a request for dynamic content or a request for static content. Dynamic content is distributed content that may vary dynamically every time a request for the content is issued from the client, for example a website having a shopping cart function or the like. Static content is distributed content that does not vary every time a request for the content is issued from the client.

In step S102, the type of the received request is determined. The determination unit 21 of the application server 1 determines whether or not the content request received from the client terminal 9 is a "predetermined request" requesting content in which a command generated by the command generation unit 26 is to be included.

In this embodiment, the "predetermined request" is a request for dynamic content. In other words, in this embodiment, the determination unit 21 determines whether or not the received request is a request for dynamic content. More specifically, the determination unit 21 determines whether or not the received request is a request for dynamic content by determining whether or not the URL or user agent information (information indicating software or hardware of the client terminal 9) included in the request matches a pattern included in a request classification determination table prepared in advance. Here, when the request is determined to be a request for dynamic content, the processing advances to step S104. When the request is determined not to be a request for dynamic content (for example, a request for static content), on the other hand, the processing advances to step S103.

In step S103, the request from the client terminal 9 is redirected to the content management server 2. When the determination unit 21 determines that the request is not a request for dynamic content, the instruction unit (the redirecting unit) 22 redirects the request from the client terminal 9 to the content management server 2 by instructing the client terminal 9 to obtain the requested content directly from the content management server 2. The reason for this is that when the request from the client terminal 9 is not a request for dynamic content, there is no need to perform function addition (turning the content into dynamic content), and therefore the client terminal 9 can be caused to obtain static content provided by the content management server 2 directly. By redirecting the request from the client terminal 9 to the content management server 2, a load required to respond to the request can be dispersed between the application server 1 and the content management server 2.

Note that when the received request is determined not to be a request for dynamic content, instead of performing redirecting, the application server 1 may obtain the content from the content management server 2 as a proxy server and distribute the obtained content to the client terminal 9. In this case, the application server 1 does not perform function addition in relation to the content obtained from the content management server 2. The processing illustrated on the flowchart is then terminated.

In step S104, a determination is made as to whether or not a valid cache is held. The application server 1 refers to the caching unit 23 to determine whether or not a valid cache for the content requested in the received request is held in the caching unit 23. Here, the valid cache is a cache in which a period of validity set in the cache has not yet expired, and which does not include an element negating the validity of the cache, such as an expiration notification from the content management server 2. The existence of a cache is determined by comparing the requested URL with a URL associated with the cache. When the caching unit 23 determines that a valid cache is held, the processing advances to step S105. When the caching unit 23 determines that a valid cache is not held, on the other hand, the processing advances to step S106.

In step S105, the content is obtained from the caching unit 23. The application server 1 obtains the content requested in the received request from the valid cache held by the caching unit 23. By obtaining already obtained content from the caching unit 23 in this manner, a processing load on the content management server 2 and the application server 1 can be lightened. Note that in this embodiment, the cached content is content prior to the function addition processing (turning content into dynamic content) to be described below. Next, the processing advances to step S110.

In steps S106 and S107, content is obtained from the content management server 2, and the obtained content is cached. The obtaining unit 24 of the application server 1 obtains the content (referred to hereafter as "obtained content") from the content management server 2 by issuing a request to the content management server 2 for the URL requested by the client terminal 9 (step S106) . Note that the obtained content is content prior to the function addition processing to be described below, and corresponds to first content according to the present invention. In this embodiment, the obtaining unit 24 obtains HTML content as the obtained content by issuing a content acquisition request in HTTP to the content management server 2. Further, the caching unit 23 holds the obtained content obtained by the obtaining unit 24 for a predetermined period in association with the URL of the content (step S107). The processing then advances to step S110.

Note that when the processing illustrated in the flowcharts is executed thereafter, the obtained content held in the caching unit 23 in step S107 is referenced in step S104 and serves as the acquisition subject in step S105.

In steps S110 and S111, a "command for application server" is retrieved from the obtained content, and a parameter relating to the retrieved "command for application server" is obtained. Here, the "command for application server" is a command that is embedded in the obtained content and interpreted and executed by the application server 1, but not executed by the client terminal 9. Further, the "command for application server" is embedded in the content during content creation by the designer.

In this embodiment, the client terminal 9 interprets and executes content using the web browser, and therefore the "command for application server" is preferably described in a format that cannot be interpreted and executed by the web browser of the client terminal 9. In this embodiment, the "command for application server" is described in triple brackets. Further, the parameter that can be specified in accordance with the command is described in parentheses following a command name. More specifically, in this embodiment, the "command for application server" is described in a following format. In the following format, a specific command name is described in a "command name", and a specific parameter value is described in a "parameter".

### [[[Command name (parameter)]]]

For example, in this embodiment, an "command for application server" for generating a command to display a description of a product having a product ID 123456 on the client terminal 9 can be described as follows.

### [[[web_items:description(123456)]]]

Further, in this embodiment, an "command for application server" for generating a command to display a red favorite mark (a star) having a width of 120 pixels on the client terminal 9 can be described as follows.

### [[[user:display_star('red.w120.template')]]]

Furthermore, in this embodiment, an "command for application server" for generating a command to display the user name of the client terminal within the content can be described as follows.

### [[[wf:username()]]]

The retrieval unit 25 retrieves the "command for application server" , which is embedded in the obtained content by being described as shown above, for example, by retrieving a control character (in this embodiment, triple brackets) or the like indicating that the command is described therein (step S110). Further, the retrieval unit 25 obtains the parameter relating to the retrieved "command for application server" (step S111). The parameter is obtained from the parentheses described after the command name, as shown above, for example. The processing then advances to step S112.

In step S112, the session ID is obtained. In this embodiment, as described above, the application server 1 manages communication between the client terminal 9 and the application server 1 and identifies the client terminal 9 or the user by issuing a session ID using a cookie and including the session ID in the communication with the client terminal 9. When a session ID is issued to the client terminal 9 from the application server 1 prior to transmission of the request received in step S101, the request includes the session ID. Hence, the application server 1 obtains the session ID from the request received in step S101. The processing then advances to step S113.

Note that the session ID acquisition processing of step S112 may be executed at any timing after the request is received from the client terminal (i.e. after step S101) and before a "command for client terminal" is generated (i.e. before step S113).

In step S113, the "command for client terminal" is generated. The command generation unit 26 generates a "command for client terminal" that can be executed by the client terminal 9 in accordance with the "command for application server" retrieved in step S110. The "command for client terminal" is generated by executing a function prepared for each "command for application server" , for example. Internal processing of the function corresponding to the "command for application server" differs for each command, but the command is generated by obtaining the "command for client terminal" (a command described in HTML or JavaScript, for example) that corresponds to the "command for application server" from a preset correspondence relationship. Further, the function may be a function that can be set using the parameter obtained in step S111 as an argument. Alternatively, the session ID obtained in step S112 may be referenced as required during processing of the function, and a "command for client terminal" corresponding to the session may be generated.

When the parameter is obtained in step S111, the command generation unit 26 generates the "command for client terminal" in consideration thereof. For example, the command generation unit 26 generates a command that can be executed by the client terminal 9 in accordance with properties (for example, the size and shape of a display area, a terminal type, a number of display columns, and so on) of a display specified by the parameter. Hence, with the system according to this embodiment, the designer of the content held by the content management server 2 can specify the size and shape of the display area and so on to be replaced by the "command for client terminal". Note, however, that the specifiable parameters are not limited to the examples described above.

Further, in this embodiment, the command generation unit 26 generates a "command for client terminal" according to which a display layout is not modified from the obtained content even after the "command for application server" is replaced by the "command for client terminal" in step S114, to be described below. In other words, the command generation unit 26 ensures that the size and shape of a display area prepared in a part describing the "command for application server" is maintained by generating a "command for client terminal" for displaying a display that fits into the size and shape of the display area. Note that the size and shape of the display area prepared in the part describing the "command for application server" may be specified explicitly by the designer of the content using the parameter described above. More specifically, the command generation unit 26 generates a
"command for client terminal" with which the size and shape of the display area are maintained using a method such as obtaining a template of a "command for client terminal" having a size and shape that correspond to the specified parameter.

Even in a case where explicit specification using the parameter and so on is not provided, the application server 1 may calculate the size and shape of the display area when the content is displayed by the client terminal 9, and generate a "command for client terminal" for displaying a display that fits into the calculated size and shape. Here, the size and shape of the display area may be calculated by referring to a command (a tag or the like including an HTML parameter such as a size specification and a shape specification) other than the "command for application server" , or by executing a display processing simulation using a web browser in the application server 1.

Furthermore, when the session ID has been obtained in step S112, the command generation unit 26 generates a different "command for client terminal" for each session by referring to the session ID. For example, when the aforesaid "command for application server" (" [[[wf:username ()]]]" in this embodiment) for generating a command to display the user name of the client terminal within the content is retrieved, the command generation unit 26 must vary the generated "command for client terminal" for each user, and therefore the display content cannot be controlled appropriately by specifying the parameter during creation of the content. Hence, the command generation unit 26 obtains the user name of the client terminal corresponding to the session ID obtained in step S112 by referring to a database (not shown in the drawings) holding correspondence relationships between session IDs and user names, and generates a "command for client terminal" to display the obtained user name. By performing this processing, dynamic content for displaying a user name, such as "Hello Mr. ...", for example, can be generated.

In steps S114 and S115, dynamic content is generated as the content corresponding to the request received in step S101, and the generated dynamic content is transmitted. The content generation unit 27 generates the dynamic content by replacing the "command for application server" included in the obtained content with the "command for client terminal" (step S114). The transmission unit 28 of the application server 1 then transmits the dynamic content generated in step S114 to the client terminal 9 serving as the transmission source of the request received in step S101 as the content corresponding to the request from the client terminal 9 (step S115). The client terminal 9 receives the content corresponding to the request, and outputs the received content. The processing illustrated in the flowcharts is then terminated.

The client terminal 9 that receives the transmitted dynamic content interprets and executes the "command for client terminal" included in the dynamic content. In other words, dynamic content including a function added by the application server can be used by the client terminal.

### (Effects)

With the system according to this embodiment, the convenience of content management is improved. More specifically, for example, a content update on a website that distributes dynamic content can be reflected easily in real time. Further, a designer can perform content design during the content update without worrying about consistency between the content layout and a dynamic part added subsequently.

## Claims

1. An information processing apparatus comprising:
obtaining means for obtaining first content from a content management server;
retrieving means for retrieving a predetermined command that is embedded in the first content and not executed by a client terminal;
command generating means for generating a command that can be executed by the client terminal in accordance with the predetermined command;
content generating means for generating second content in which the predetermined command of the first content is replaced by the command generated by the command generating means; and
transmitting means for transmitting the second content in response to a request from the client terminal.

2. The information processing apparatus according to claim 1, wherein the command generating means generates a command not to modify a display layout of the first content even after the content generating means has performed the replacement.

3. The information processing apparatus according to claim 1 or 2, wherein the command generating means generates the command in accordance with communication identification information for identifying communication with the client terminal in addition to the predetermined command.

4. The information processing apparatus according to any one of claims 1 to 3, further comprising caching means for holding the first content obtained by the obtaining means,
wherein, when the first content has been cached by the caching means upon reception of a request for content from the client terminal, the content generating means generates the second content on the basis of the first content cached by the caching means.

5. The information processing apparatus according to any one of claims 1 to 4, wherein the command generating means interprets a parameter included in the predetermined command, and generates the command that can be executed by the client terminal in accordance with an interpretation result.

6. The information processing apparatus according to claim 5, wherein the parameter includes a parameter specifying a property of a display corresponding to the command generated by the command generating means, and
the command generating means generates the command that can be executed by the client terminal in accordance with the display property specified by the parameter.

7. The information processing apparatus according to any one of claims 1 to 6, wherein the content management server has a function for transmitting HTML content in response to a content acquisition request in HTTP, and
the obtaining means obtains HTML content as the first content by issuing a content acquisition request in HTTP to the content management server.

8. The information processing apparatus according to any one of claims 1 to 7, further comprising:
determining means for determining whether or not a request for content received from the client terminal is a predetermined request requesting content in which the command generated by the command generating means is to be included; and
instructing means for instructing the client terminal to obtain the requested content directly from the content management server when the determining means determines that the request is not the predetermined request,
wherein, when the determining means determines that the request is the predetermined request, the content generating means generates the second content.

9. An information processing method in which a computer executes:
obtaining first content from a content management server;
retrieving a predetermined command that is embedded in the first content and not executed by a client terminal;
generating a command that can be executed by the client terminal in accordance with the predetermined command;
generating second content in which the predetermined command of the first content is replaced by the command generated in the command generating step; and
transmitting the second content in response to a request from the client terminal.

10. A program for causing a computer to function as:
obtaining means for obtaining first content from a content management server;
retrieving means for retrieving a predetermined command that is embedded in the first content and not executed by a client terminal;
command generating means for generating a command that can be executed by the client terminal in accordance with the predetermined command;
content generating means for generating second content in which the predetermined command of the first content is replaced by the command generated by the command generating means; and
transmitting means for transmitting the second content in response to a request from the client terminal.
